# EUROPEAN PATENT SPECIFICATION

(11) **EP 2 153 969 B1**
(45) Date of publication and mention of the grant of the patent: **25.12.2013**
(21) Application number: 09167525.6
(22) Date of filing: 10.08.2009
(51) Int. Cl.: B29C 45/14

(54) **Method for making a vehicle trim panel**
Verfahren zur Herstellung einer Verkleidung für Fahrzeug
Procédé de fabrication d'un panneau de garniture pour voiture

(30) Priority: 11.08.2008 US 228213
(43) Date of publication of application: 17.02.2010
(73) Proprietor: International Automotive Components Group North America, Inc., Southfield MI 48034 (US)
(72) Inventor: Nilsrud, Öivind, 53238 Skara (SE); Wedebrand, Bo, 53295 Skara (SE)
(74) Representative: Liesegang, Eva

(56) References cited:
- EP-A- 1 120 220
- EP-A- 1 160 070
- WO-A-03/026864
- JP-A- 9 286 042
- US-A- 6 093 272

## Description

### BACKGROUND

Various embodiments of a mold assembly for forming a trim panel are described herein. In particular, the embodiments described herein relate to an improved mold assembly for forming a trim panel for a vehicle, and an improved method of manufacturing such a trim panel.

Vehicle trim panels are often comprised of a cloth or vinyl covering over a rigid substrate. Such trim panels may have regions of different aesthetic characteristics. For example, it may be desirable to provide a two-tone trim panel having regions of different colors. It may also be desirable to provide a trim panel having a first region covered with sheet vinyl and an adjacent region covered with a sheet of fabric.

For example, US Patent Publication No. 2007/0278713 discloses a method of producing a composite part from a first molded part and a second molded part by injection molding. The first and second molded parts are bonded together by a layer of plastic via injection molding, injection compression molding, or back compression molding.

US Patent No. 4,978,407 discloses a method of producing laminated panels having folds. The folds are formed by using a male die portion to push overlapping portions of trim material into a female mold portion. The seam defined by the overlapping portions of trim material remains fixed due to the normal resilience of the overlapping trim material. Alternately, at least one of the panel members may be hot thermoplastic substrate. Document EP 1 160 070 A discloses a similar method of manufacturing a trim panel.

US Patent No. 6,093,272 discloses a method of making a trim panel having two different trim materials. A sheet material is draped over a blade in a mold half. A U-shaped flange structure of a composite panel is snapped over the sheet material to retain the sheet material on the blade structure. A molding material is then injected into a cavity behind the composite panel to define a backing for the trim panel.

US Patent No. 7,332,207 discloses a method of disposing foam between a substrate and a skin to define a vehicle interior component.

### SUMMARY

The present invention provides a method according to claim 1. Any features described in relation to the structure of the mold assembly can also be used in the method of the invention.

The present application describes various embodiments of a mold assembly and a method of forming a vehicle trim component having a first layer and a second layer, wherein the first layer has a first member and a second member. In one embodiment, the method includes overlapping an edge of a first member of the first layer with an edge of a second member of the first layer within a mold having first and second mold portions to define a seam location. One of the first and second mold portions is moved into contact with the other of the mold portions to define a second layer cavity between the mold portion and the first layer. A second layer is formed within the cavity and adjacent the first layer, wherein the material defining the second layer urges the edges of the first and second members into engagement with one another to define a seam in the first layer such that no portion of the material defining the second layer extends between the edges of the first and second members.

Other advantages of the mold assembly and method of forming a vehicle trim component will become apparent to those skilled in the art from the following detailed description, when read in light of the accompanying drawings.

### BRIEF DESCRIPTION OF THE DRAWINGS

Fig. 1 is an elevational view, partially in section, of a door trim panel.

Fig. 2 is a schematic cross-sectional view of a first embodiment of a mold assembly for manufacturing the door trim panel illustrated in Fig. 1.

Fig. 3 is an enlarged cross-sectional view of a portion of the mold assembly illustrated in Fig. 2, showing the mold assembly in a closed position prior to the substrate being formed.

Fig. 4 is an enlarged cross-sectional view of the portion of mold assembly illustrated in Fig. 2, showing the mold assembly in a closed position during formation of the substrate.

Fig. 5 is an enlarged cross-sectional view of a portion of mold assembly illustrated in Fig. 2, showing the mold assembly in a closed position and showing an alternate embodiment of the door trim panel, which is not an embodiment of claim 1.

Fig. 6 is an enlarged plan view of a second embodiment of the groove illustrated in Fig. 2.

Fig. 7 is an enlarged schematic cross-sectional view of the first trim material portion shown in Figs. 2 through 5.

### DETAILED DESCRIPTION

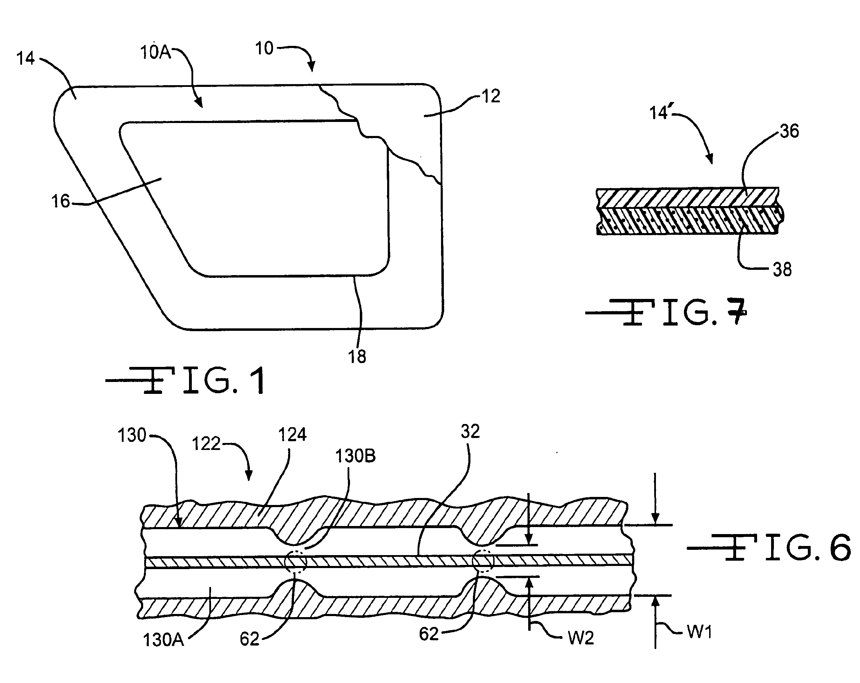

Referring now to the drawings, there is illustrated in Fig. 1 a vehicle trim component or panel, generally shown at 10. In the exemplary embodiment illustrated, the trim panel 10 is an automotive door trim panel 10 which mounts to a vehicle door assembly (not shown). It will be appreciated however, that the trim panel 10 of the subject invention may be any desired vehicle trim panel, such as a center console, an instrument panel, a cup holder, and the like.

In the illustrated embodiment, a first layer or A-side surface 10A of the trim panel 10 will face the interior cabin of the vehicle. The door trim panel 10 also includes a second layer or substrate 12, described in detail below. The substrate 12 may be formed from any desired material such as a polymer.

One example of a suitable polymer is polypropylene. Another example is a polypropylene and EPDM blend. A further example is a polypropylene and EPDM blend with filler material. One example of a suitable filler material is talcum. In one embodiment, polypropylene and EPDM is blended with 20 percent talcum filler. It will be understood that any other polymer, polymer blend, and filler material may be used to form the substrate. It will be further understood that one skilled in the art will be able to determine the appropriate amount of filler material to be used through routine experimentation.

It will be understood that the A-side surface 10A may include an outer layer visible to a vehicle occupant. Such an outer layer may be formed from a material softer than the material of the substrate 12 (as will be described in detail below), such that the outer layer is tactilely soft relative to the substrate 12. The outer layer may also have any desired texture and color. The trim panel 10 may also have any desired surface contour.

In the embodiment illustrated in Fig. 1, the A-side surface 10A includes first and second trim material portions, 14 and 16, respectively. The first and second portions 14 and 16 may be formed from flexible sheet material, such as thermoplastics, vinyl, or cloth. The two portions 14 and 16 may be formed from the same material or may be formed from materials that have different aesthetic or softness characteristics. For example, one or both of the portions 14 and 16 may be formed from thermoplastic olefin (TPO), or TEPEO 2® sheeting manufactured by Benecke-Kaliko AG, and other thermoplastic polyolefins. Alternatively, a vinyl-polypropylene foam laminate may be used to form either of the first and second portions 14 and 16. It will be understood that the A-side surface of the first portion 14 may have any desired texture and color. A joint between the first portion 14 and the second portion 16 defines a seam 18, the formation of which will be described in detail below.

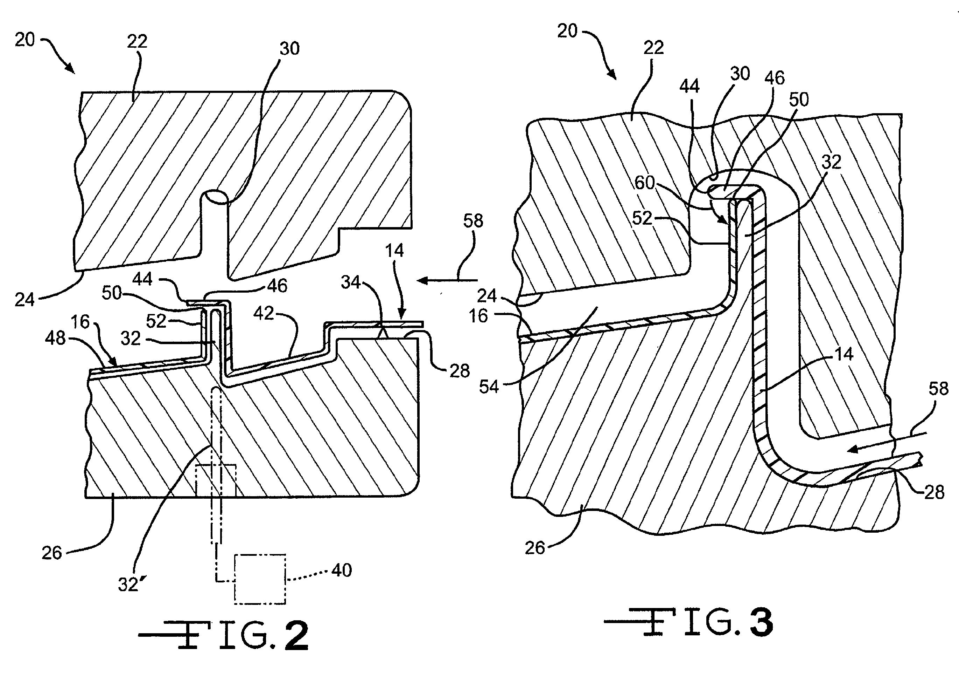

It will be understood that the first and second portions 14 and 16 may be single layers of material, such as TPO , TEPEO 2®, polyvinyl chloride (PVC), cloth, or any combination thereof, as shown in Figs. 2 through 5, or may have more than one layer. For example, an alternate embodiment of the first portion 14' may include a first or A-side layer 36, and a second layer 38, as shown in Fig. 7. Although only two trim material portions 14 and 16 are described herein, it will be understood that the A-side surface 10A may include three or more trim material portions joined together as described herein.

The first layer 36 may be formed from any desired material, such as a polymer or plastic. Examples of material suitable for the first layer 36 include TPO , TEPEO 2®, PVC, cloth, or any combination thereof. It will be understood that the A-side surface 10A may have any desired texture and color. Although not illustrated, it will be further understood that the second portion 16 may also be formed having more than one layer, substantially as described with respect to the first portion 14'.

The second layer 38 may be formed from any desired material, such as for example a polypropylene and EPDM blend with filler material as describe in detail above. It will be understood that any other polymer or polymer blend may be used to form the substrate. It will be understood that the first portion 14 may also be formed having more than two layers of material such as additional layers of TPO, TEPEO 2®, and/or PP foam.

Referring now to Fig. 2, there is illustrated a first embodiment of a mold assembly for forming the trim panel 10 is indicated generally at 20. It will be appreciated however, that the various embodiments of the mold assembly 20 disclosed and described herein, may be used to form any desired trim component or trim panel, such as a vehicle instrument panel, a center console, and the like.

The mold assembly 20 includes a first mold portion 22 defining a first contour surface 24, and a second mold portion 26 defining a second mold or contour surface 28. The illustrated mold assembly 20 is moveable between an open position, as shown in Fig. 2, and a closed position, as best shown in Fig. 3. The first mold portion 22 includes a first embodiment of a groove 30 formed in the first contour surface 24. An elongated blade 32 extends outwardly of the second contour surface 28 of the second mold portion 26 opposite the groove 30. A plurality of mounting bosses or pins 34 extend outwardly adjacent a peripheral edge 36 of the second mold portion 26.

In the embodiment illustrated in Fig. 2, the first and second portions 14 and 16 are shown spaced apart from the second contour surface 28 for purposes of clarity. It will be understood however, that the first and second portions 14 and 16 would be substantially adjacent the second contour surface 28 prior to the mold assembly 20 being closed.

If desired, the blade 32 may be a movable blade, such as shown by the phantom line 32'. The blade may be moved between a recessed position, as shown generally at 32', and an extended position, as shown at 32. The movement of the blade 32 may be controlled by any desired means. For example, the mold assembly 20 may include a controller 40, illustrated schematically in Fig 2, for controlling the movement of the blade 32.

In operation, a first member 42 defining the first portion 14 of the A-side surface 10A is placed on the second mold surface 28 and attached thereto by the pins 34. In the illustrated embodiment, the first member 42 is pre-formed to have substantially the same shape as the second mold surface 28. An inboard peripheral edge 44 (the left-most edge when viewing Figs. 2 and 3) includes a lip portion 46 formed such that it is substantially perpendicular to the blade 32 and extends beyond the blade 32 and the second member 48.

The second member 48 defines the second portion 16 of the A-side surface 10A and is placed on the second mold surface 28 and attached thereto by the pins (not shown in Fig. 2), such as the pins 34. In the illustrated embodiment, the second member 48 is pre-formed to have substantially the same shape as the second mold surface 28. An inboard peripheral edge 50 (the right-most edge when viewing Figs. 2 and 3) includes a lip portion 52 extending substantially parallel to the blade 32 and terminating adjacent the lip portion 46 of the first member 42.

When the mold assembly 20 is in the closed position, as shown in Fig. 3, the blade 32 and the second mold surface 28 guides and urges the edges 44 and 50 of the first and second portions 14 and 16, respectively, into the groove 30 and into engagement with one another. A cavity 54 is defined between the first and second portions 14 and 16 and the first contour surface 24.

A third material 56 which defines the substrate 12 may then be introduced into the cavity 54 in the direction of the arrow 58 (from right to left when viewing Figs. 2 through 4), such as in an injection molding process. The third material 56 may be any desired material, such as for example a polymer. Examples of a suitable polymers include polypropylene, a polypropylene and EPDM blend, and a polypropylene and EPDM blend with filler material as describe in detail above. It will be understood that any other polymer or polymer blend may be used to form the substrate. The introduction of the material 56 urges the edges 44 and 50, of the first and second material portions 14 and 16, respectively, in the direction of the arrow 60 and into engagement with one another to further define the seam 18.

Advantageously, as the injected third material 56 flows in the direction of the arrow 58, the edge 44 of the first portion 14 is caused to bend around the edge 50 of the second portion 16 and urged into engagement with the edge 50, such that no portion of the material 56 defining the second layer 12 extends or flows between the marginal edges 44 and 50 during the introduction of the material 56.

Each of the first and second portions, 14 and 16, and the substrate 12 may have any desired thickness. It will be understood that one skilled in the art will be able to determine the appropriate and respective thicknesses of the first and second portions, 14 and 16, and the substrate 12 through routine experimentation.

In the embodiments illustrated in Figs. 3 through 5, the material defining the first and second portions, 14 and 16, of the A-side surface 10A may be slightly compressed by the material 56 during the injection molding process. When removed from the mold assembly 20, the first and second portions, 14 and 16, may re-expand to a thickness equal to a portion of their thicknesses prior to being compressed by the material 56.

Advantageously, two or more trim material portions, such as the first and second trim material portions, 14 and 16, may be joined in one injection molding tool to form a trim panel, such as the trim panel 10.

Another advantage of the mold assembly 20 and method described herein is that the blade 32 fixes the edges 44 and 50 of the first and second trim material portions, 14 and 16, respectively, with respect to the groove 30. Such fixing of the position of the edges 44 and 50 ensures that the seam 18 remains uniform and that the edges 44 and 50 are not undesirably moved by the pressure of the third material 56 during the injection molding process.

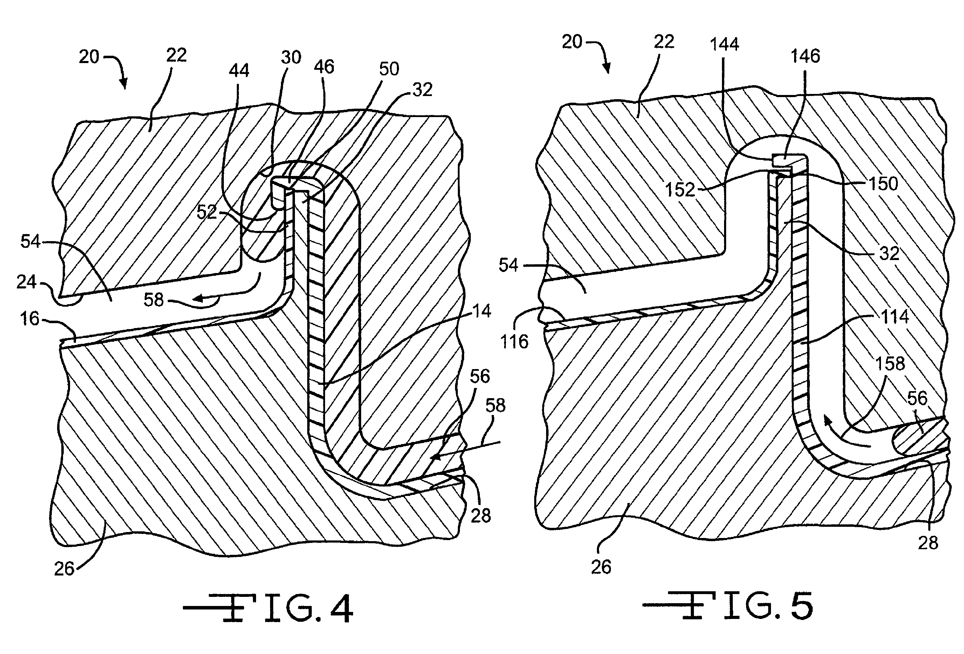

Referring now to Fig. 5, and using like reference numbers to indicate corresponding parts, there is indicated generally at 114 and 116, second embodiments of the first and second material portions, respectively, not covered by claim 1. In the illustrated embodiment, the first material portion 114 is pre-formed to have substantially the same shape as the second mold surface 28. An inboard peripheral edge 144 (the left-most edge when viewing Fig. 5) includes a lip portion 146 formed such that it is substantially perpendicular to the blade 32, but does not extend beyond the lip portion 152 of the second material portion 116.

In the illustrated embodiment, the second material portion 116 is pre-formed to have substantially the same shape as the second mold surface 28. An inboard peripheral edge 150 (the right-most edge when viewing Fig. 5) includes a lip portion 152 extending substantially perpendicular to the blade 32 and terminating adjacent the lip portion 146 of the first material portion 114, but does not extend beyond the lip portion 146 of the first material portion 114.

Advantageously, as the injected third material 56 flows through the cavity (in the direction of the arrow 158), and over the edges 144 and 150, the edges 144 and 150 are urged into engagement with one another to further define the seam 18.

Referring now to Fig. 6, and using like reference numbers to indicate corresponding parts, there is indicated generally at 122 a portion of a second embodiment of the first mold portion. The first mold portion 122 includes a second embodiment of a groove 130 formed in the first contour surface 124. The groove 130 has a first portion 130A having a width w1 and a second portion 130B having second or reduced width portion w2. Any desired number of reduced width portions y may be formed in the groove 130.

In operation, the blade 32 and the second mold surface (not shown in Fig. 6) guides and urges the edges 44, 144 and 50, 150 of the first and second portions 14, 114 and 16, 116 respectively, into the first and second portions 130A and 130B of the groove 130 and into engagement with one another. The relatively narrower second portion 130B of the groove 130 causes the first and second material portions 14, 114 and 16, 116, to be slightly compressed between the blade 32 and the second portion 130B of the groove 130. The positions of the first and second material portions 14, 114 and 16, 116 are thereby fixed with respect to the groove 130, ensuring that the seam 18 remains uniform and that the edges 44, 144 and 50, 150 are not undesirably moved by the pressure of the third material 56 during the injection molding process.

The principle and mode of operation of the mold assembly and method of forming a vehicle trim component have been described in its various embodiments. However, it should be noted that the mold assembly and method of forming a vehicle trim component described herein may be practiced otherwise than as specifically illustrated and described without departing from its scope, as defined in the appended claims.

## Claims

1. A method of forming a vehicle trim component having a first layer (10) and a second layer (12), the first layer having a first member (14; 114) and a second member (16; 116), the method using a mold having first and second mold portions (22, 26), the second mold portion (26) including an outwardly extending blade (32), the method comprising the steps of:
a. overlapping within the mold, an edge (44; 144) of said first member (14; 114) of said first layer with an edge (50; 150) of said second member (16; 116) of said first layer to define a seam location wherein an inboard peripheral edge (44; 144) of the first member (14; 114) includes a lip portion (46) arranged such that it is substantially perpendicular to the blade (32) and extends beyond the blade (32) and the second member (16; 116), and an inboard peripheral edge (50; 150) of the second member (16; 116) includes a lip portion (52) arranged such that it is substantially parallel to the blade (32) and terminated adjacent the lip portion (46) of the first member.
b. moving one of the first mold portion (24; 224) and the second mold portion (26; 126; 226) into contact with the other of the second mold portion (26; 126; 226) and the first mold portion (24; 224) to define a second layer cavity (54) between one of the first and second mold portions (24, 26; 126; 224, 226) and the first layer; and
c. forming a second layer within the cavity (54) and adjacent the first layer, wherein the material (56) defining the second layer is introduced into the cavity from the side of the first member (14) and urges the edge (44, 50; 144, 150) of the first member (14; 114) over the edge (50) of the second member (16; 116) of the first layer to define a seam (18) in the first layer such that no portion of the material defining the second layer extends between the edges of the first and second members (14, 16; 114, 116).

2. The method according to Claim 1, wherein in step (c), the material (56) defining the second layer exerts a force on the edge (44; 144) of the first member (14; 114) such that the edge (44; 144) of the first member (14; 114) is deformed and urged into engagement with the lip portion (52) of the second member (16; 116).

3. The method according to Claim 1 or 2, wherein the first mold portion includes an elongated groove (30; 130; 230) defining the location for the seam (18) between the first and second members (14, 16; 114, 116) and wherein in step (b) the overlapping edges (44, 50; 144, 150) of the first and second members (14, 16; 114, 116) are urged into the groove (30; 130; 230).

4. The method according to Claim 3, wherein the blade (32) and the surface of the second mold portion (126; 126; 226) urges the overlapping edges into the groove (30; 130; 230), and retains the position of the edges (44, 50; 144, 150) relative to one another during step (c).

## Patentansprüche

1. Verfahren zum Ausbilden einer Formteilkomponente für ein Fahrzeug, die eine erste Schicht (10) und eine zweite Schicht (12) aufweist, wobei die erste Schicht ein erstes Element (14; 114) und ein zweites Element (16; 116) umfasst, wobei das Verfahren eine Form mit einem ersten und einem zweiten Formabschnitt (22, 26) verwendet, wobei der zweite Formabschnitt (26) eine sich nach außen erstreckende Klinge (32) aufweist, wobei das Verfahren folgende Schritte umfasst:
(a) Überlagern eines Randes (44; 144) des ersten Elementes (14; 114) der ersten Schicht und eines Randes (50; 150) des zweiten Elementes (16; 116) der ersten Schicht innerhalb der Form, um einen Saumbereich zu definieren, wobei ein innen liegender Umfangsrand (44; 144) des ersten Elementes (14; 114) einen Lippenabschnitt (46) umfasst, der derart angeordnet ist, dass er zu der Klinge (32) im Wesentlichen senkrecht ist und sich über die Klinge (32) und das zweite Element (16; 116) hinaus erstreckt, und wobei ein innen liegender Umfangsrand (50; 150) des zweiten Elementes (16; 116) einen Lippenabschnitt (52) aufweist, der so angeordnet ist, dass er im Wesentlichen parallel zu der Klinge (32) ist und benachbart zu dem Lippenabschnitt (46) des ersten Elementes endet;
(b) Bewegen entweder des ersten Formabschnitts (24; 224) oder des zweiten Formabschnitts (26; 126; 226), um diesen in Kontakt mit dem anderen Formabschnitt zu bringen, um eine Kavität (54) für die zweite Schicht zwischen einem der Formabschnitte (24, 26; 126; 224, 226) und der ersten Schicht zu bilden; und
(c) Ausbilden der zweiten Schicht in der Kavität (54) und benachbart zu der ersten Schicht, wobei das Material (56), welches die zweite Schicht bildet, in die Kavität von der Seite des ersten Elementes (14) her eingeführt wird und den Rand (44, 50; 144, 150) des ersten Elementes (14; 114) über den Rand (50) des zweiten Elementes (16; 116) der ersten Schicht drückt, um einen Saum (18) in der ersten Schicht zu definieren, so dass kein Teil des Materials, welches die zweite Schicht bildet, zwischen die Ränder des ersten und des zweiten Elementes (14, 16; 114, 116) gelangt.

2. Verfahren nach Anspruch 1, wobei im Schritt (c) das Material (56), das die zweite Schicht bildet, eine Kraft auf den Rand (44; 144) des ersten Elementes (14; 114) ausübt, so dass der Rand (44; 144) des ersten Elementes (14; 114) verformt und in Eingriff mit dem Lippenabschnitt (52) des zweiten Elementes (16; 116) gedrückt wird.

3. Verfahren nach Anspruch 1 oder 2, wobei der erste Formabschnitt eine längliche Vertiefung (30; 130; 230) aufweist, die einen Ort für den Saum (18) zwischen dem ersten und dem zweiten Element (14, 16; 114, 116) definiert, und wobei im Schritt (b) die überlagerten Ränder (44, 50; 144, 150) des ersten und des zweiten Elementes (14, 16; 114, 116) in die Vertiefung (30; 130; 230) gedrückt werden.

4. Verfahren nach Anspruch 3, wobei die Klinge (32) und die Oberfläche des zweiten Formabschnitts (26; 126; 226) die überlagerten Ränder in die Vertiefung (30; 130; 230) drücken und die Position der Ränder (44, 50; 144, 150) während des Schritts (c) relativ zu einander hält.

## Revendications

1. Procédé pour former un composant de garniture pour véhicule ayant une première couche (10) et une seconde couche (12), la première couche ayant un premier élément (14 ; 114) et un second élément (16 ; 116), le procédé utilisant un moule ayant des première et seconde parties de moule (22, 26), la seconde partie de moule (26) comprenant une lame (32) s'étendant vers l'extérieur, le procédé comprenant les étapes consistant à :
a. faire chevaucher à l'intérieur du moule, un bord (44 ; 144) dudit premier élément (14 ; 114) de ladite première couche, avec un bord (50 ; 150) dudit second élément (16 ; 116) de ladite première couche afin de définir un emplacement de soudure, dans lequel un bord périphérique interne (44 ; 144) du premier élément (14 ; 114) comprend une partie de lèvre (46) agencée de sorte qu'elle est sensiblement perpendiculaire à la lame (32) et s'étend au-delà de la lame (32) et du second élément (16 ; 116), et un bord périphérique interne (50 ; 150) du second élément (16 ; 116) comprend une partie de lèvre (52) agencée de sorte qu'elle est sensiblement parallèle à la lame (32) et se termine de manière adjacente à la partie de lèvre (46) du premier élément ;
b. déplacer l'une parmi la première partie de moule (24 ; 224) et la seconde partie de moule (26 ; 126 ; 226) en contact avec l'autre parmi la seconde partie de moule (26 ; 126 ; 226) et la première partie de moule (24 ; 224) afin de définir une seconde cavité de couche (54) entre l'une des première et seconde parties de moule (24, 26 ; 126 ; 224, 226) et la première couche ; et
c. former une seconde couche à l'intérieur de la cavité (54) et adjacente à la première couche, dans lequel le matériau (56) définissant la seconde couche est introduit dans la cavité à partir du côté du premier élément (14) et pousse le bord (44, 50 ; 144, 150) du premier élément (14 ; 114) sur le bord (50) du second élément (16 ; 116) de la première couche afin de définir une soudure (18) dans la première couche de sorte qu'aucune partie du matériau définissant la seconde couche ne s'étend entre les bords des premier et second éléments (14, 16 ; 114, 116).

2. Procédé selon la revendication 1, dans lequel, à l'étape (c), le matériau (56) définissant la seconde couche exerce une force sur le bord (44 ; 144) du premier élément (14 ; 114) de sorte que le bord (44 ; 144) du premier élément (14 ; 114) est déformé et poussé en mise en prise avec la partie de lèvre (52) du second élément (16 ; 116).

3. Procédé selon la revendication 1 ou 2, dans lequel la première partie de moule comprend une rainure allongée (30 ; 130 ; 230) définissant l'emplacement pour la soudure (18) entre les premier et second éléments (14, 16 ; 114, 116) et dans lequel, à l'étape (b), les bords qui se chevauchent (44, 50 ; 144, 150) des premier et second éléments (14, 16 ; 114, 116) sont poussés dans la rainure (30 ; 130 ; 230).

4. Procédé selon la revendication 3, dans lequel la lame (32) et la surface de la seconde partie de moule (126 ; 126 ; 226) pousse les bords qui se chevauchent dans la rainure (30 ; 130 ; 230), et conserve la position des bords (44, 50 ; 144, 150) l'un par rapport à l'autre, pendant l'étape (c).
